# EUROPEAN PATENT SPECIFICATION

(11) **EP 3 442 199 B1**
(45) Date of publication and mention of the grant of the patent: **14.04.2021**
(21) Application number: 17306051.8
(22) Date of filing: 07.08.2017
(51) Int. Cl.: H04W 4/80, H04L 29/08

(54) **APPARATUS FOR DETERMINING THE PRESENCE OF A RESOURCE AND A METHOD**
VORRICHTUNG ZUR BESTIMMUNG DER ANWESENHEIT EINER RESSOURCE UND VERFAHREN
APPAREIL PERMETTANT DE DÉTERMINER LA PRÉSENCE D'UNE RESSOURCE ET PROCÉDÉ

(43) Date of publication of application: 13.02.2019
(73) Proprietor: Nokia Technologies Oy, 02610 Espoo (FI)
(72) Inventor: LE FOL, Olivier, 22304 Lannion (FR); LEPROVOST, Yann, 22304 Lannion (FR); LAJEUNIE, Cassandra, 22304 Lannion (FR); GUILLERM, David, 22304 Lannion (FR); ASTIER, Jerome, 22304 Lannion (FR); OSMOND, Marin, 22304 Lannion (FR); CHARDON, Herve, 22304 Lannion (FR); LE BOUFFAN, Alain, 22304 Lannion (FR)
(74) Representative: Bryers LLP

(56) References cited:
- EP-A1- 2 965 563
- WO-A1-2015/044677
- US-A1- 2016 128 158
- AKINSIKU ADEGBOYEGA ET AL: "BeaSmart: A beacon enabled smarter workplace", NOMS 2016 - 2016 IEEE/IFIP NETWORK OPERATIONS AND MANAGEMENT SYMPOSIUM, IEEE, 25 April 2016 (2016-04-25), pages 1269-1272, XP032918293, DOI: 10.1109/NOMS.2016.7503001 [retrieved on 2016-06-30]
- "Estimote SDK updated with accelerometer and temperature sensor", Estimote blog, 1 April 2014 (2014-04-01), XP55144895, Retrieved from the Internet: URL:http://blog.estimote.com/post/81380655 308/estimote-sdk-updated-with-acceleromete r-and-temperature [retrieved on 2014-10-07]

## Description

### TECHNICAL FIELD

The present invention relates, in general, to apparatus for determining the availability presence of a resource, and a method.

### BACKGROUND

The management of workplace resources is a factor that can contribute to running costs and time resources for occupancy analyses of building occupancy and energy usage. For employees within the workplace, particularly in a flexible office space environment for example, it can be difficult to find a free desk, locate colleagues or manage meeting rooms.

Approaches for managing workplace resources exist. For example, occupancy analyses can include: 1) WIFI triangulation, where smartphones are detected via specific WiFi sensors, and 2) The detection of IoT (Internet of Things) devices carried by employees, such as badges or other devices, via IoT sensors.

The document "BeaSmart: A beacon enabled smarter workplace", NOMS 2016 - 2016 IEEE/IFIP NETWORK OPERATIONS AND MANAGEMENT SYMPOSIUM, IEEE, 25 April 2016, pages 1269-1272, XP032918293, describes methods for using Bluetooth Low Energy (BLE) beacons in location based systems.

International patent application WO2015/044677 A1 describes methods and systems for providing context sensitive information to a mobile device, in particular location-based information.

Document "Estimate SOK updated with accelerometer and temperature sensor", Estimate blog, 1 April 2014, XP55144895, describes accelerometer and temperature sensor support for iBeacons.

European Patent Application EP2865563A1 discloses a low power method of wirelessly transmitting data between devices.

### SUMMARY

The invention is defined by a first independent claim referring to an apparatus (claim 1) and a second independent claim referring to a method (claim 8). Further embodiments are defined by the dependent claims.

According to a first aspect, there is provided an apparatus for determining the availability presence of a resource, the apparatus comprising a low energy wireless sensor configured to detect a resource presence state at a location, a network device in communication with the sensor comprising: a processor arranged to modify identification data of the network device based on the presence state at the location, and a transmitter configured to transmit the modified identification data to an application server.

The apparatus may further comprise multiple sensors to determine a presence state of a resource at respective different locations.

The sensor may be an RFID sensor or any other type of presence sensors. The resource may be an employee or employee device in a workplace. The sensor may comprise an indicator to present a visual indication of a presence state at a location.

The presence state may relate to the resource being present or not present in a vicinity of one or more sensors. The application server may comprise a database with associations between two or more network device identifications/Hub IDS, MAC addresses, employee names, and building locations.

According to a second aspect, there is provided a method for determining the availability presence of a resource in a network infrastructure, comprising the steps of at a low energy wireless sensor, detecting a resource presence state at a location, at a network device, modifying identification data of the network device based on the presence state at the location, and at the network device, transmitting the modified identification data to an application server.

The network device may change status information data of the sensors according to the presence state. The modified identification data may be transmitted to the application server using a short-range communication protocol. The modified identification data may be transmitted to the application server via a client or gateway device. The network device may transmit the modified identification data at 433 MHz (or BLE) to the client or gateway device. The client or gateway device may transmit the received information to the application server using ethernet or WiFi.

The method may further comprise the step of providing an occupancy map to a user- end interface.

### BRIEF DESCRIPTION OF THE DRAWINGS

Embodiments will now be described, by way of example only, with reference to the accompanying drawings, in which:
Figure 1 shows a system having a sensor-based network device for managing resources via a wireless network according to an example;
Figure 2 shows a system for managing resources via an employee device (PC or laptop or smartphone) according to an example;
Figure 3 shows a system for managing resources via a client according to an example; and
Figure 4 shows a flow chart of a method for managing resources according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

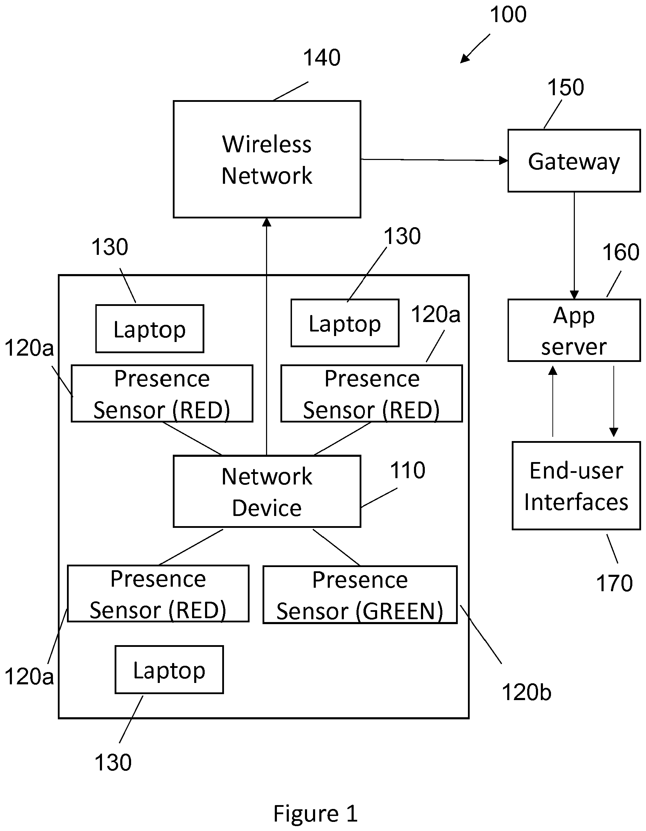

Figure 1 is a schematic representation of a system 100 using a sensor-based network device 110 ("Hub") with database management for managing resources according to an example. The sensor-based network device has multiple sensors 120a, 120b connected to it, and can use a communication protocol to communicate with one or more of the sensors.

In an example, each of the sensors 120a, 120b are presence sensors, and can be in the form of an RFID sensor or any other type of sensor that is able to detect the presence of an employee or employee device in the vicinity of the sensor. The sensors can communicate with the Hub via wire or wirelessly using Bluetooth, radio frequency, near-field communication or other short-range communication protocols. In an office environment for example, the sensors are connected to the Hub according to an office configuration or layout of desks or availability of network interfaces. An employee device such as a laptop 130 is connectable to one of the network interfaces, through a wired or wireless connection.

In an example, sensors 120a, 120b can determine whether a physical location is occupied by an employee or employee device. In an example, the presence of the employee or employee device can be determined based on any one or more of detecting movement (using a motion sensor for example) or a heat signature (using an infrared camera for example) of an employee. The presence of an employee in the vicinity or detectable range of a sensor can therefore be detected and, in an example, indicated at, on or near the sensor. For example, a sensor can display a coloured, such as red, light 120a when the physical location is determined as occupied and can display another colour, such as green (sensor 120b) when the physical location is determined to be unoccupied. For example, this can be used to show that a desk is in use when the light is red and that a desk is free when the light is green. The unoccupied state may relate to a default state of the sensors or sensor-based network device (or "sleep mode"). When there is a change in state from unoccupied to occupied the sensor-based network device can change state to indicate the presence of an employee and indicate that the desk or space has become occupied (and vice versa).

Therefore, according to an example, sensors can be used to provide information to a sensor-based network device about the location or presence of employees and resources. A resource can include an apparatus, such as a laptop device for example, or a user of such a device.

In an example, when an employee sits on a desk his or her presence is detected via a sensor that triggers a presence contact. The presence contact information can be transmitted from the sensor to the Hub. The Hub can then modify its state to indicate the presence of the employee (e.g. a visual confirmation to the employee that their presence has been detected). Identification (ID) data of the Hub can then be modified. The ID data can contain a network address of the Hub and/or a contact status of adjacent desks or network interfaces. In an example, the ID data is transmitted to an application server ("App server").

In the example shown in Figure 1, the modification of the Hub ID can be transmitted by the Hub via a wireless network 140, for example a 433 MHz network, via a gateway 150 to the App server 160. As such, the Hub collects the presence or contact status of resources and sends its modified ID data through the 433MHz network to the gateway that redirects the modified ID and/or other information to the App server 160. This can be effected using a company intranet, ethernet or WiFi for example.

The App server 160 can include a database with associations between Hub IDs, MAC addresses and building locations. A determination of which employee sits at which desk can be aided by requesting a workplace IT service to provide a database of the connection ports at each desk to enable determination, using the database, of the relationship between the ports and respective employee names. As such, identifying information from a workplace IT service can be used to identify which employee sits at which desk This makes it possible to provide an indication to an end-user interface 170 of the occupancy, employee ID (that may be provided by the workplace IT services or an employee themselves for example) and the location of the employee. This information can be displayed or otherwise provided to user-end interfaces, such as being displayed as part of a global address book or email contact list, or map of employee locations, for example. As such, an occupancy map can be communicated to, and displayed at, the end-user interfaces.

In an example, the sensor-based network device may be a Bluetooth Low Energy (BLE) beacon or Hub having several sensors connected to it. The sensor-based network device may operate a BLE protocol. The BLE Hub may communicate with the App server 160 via Ethernet or WiFi.

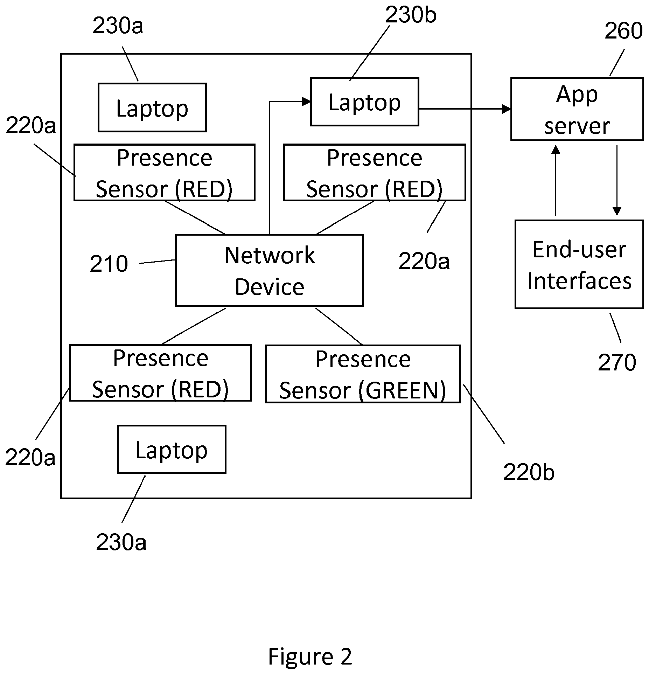

In the example shown in Figure 2, sensors 220a indicate an occupied state of the desks, spaces or network interfaces by an employee device 230a, 230b and sensors 220b indicate an unoccupied state of a desk. When an employee or employee device 230b is detected as having arrived at a desk, the sensor at that desk can indicate the change in status or presence contact to the Hub 210. The BLE Hub can then modify its state to indicate the presence of the employee. Upon receiving confirmation of the presence of the employee or employee device, the ID data of the Hub can be modified. The modification of the Hub ID data can be detected by a device, such as laptop 230b or a PC or smartphone of the employee that has just arrived, for example via BLE protocol or a company intranet connection. Once the Hub ID has been detected by the employee device 230b, the employee device can transmit the modification to the App server 260 (the employee device can act as a gateway using Bluetooth to Ethernet or WiFi for example). An indication can then be provided to the end-user interface 270 describing the occupancy status, employee ID and the location of the employee.

The communication of the gateway with the App server can be dependent on IT infrastructure (wired via Ethernet or wireless via WiFi).

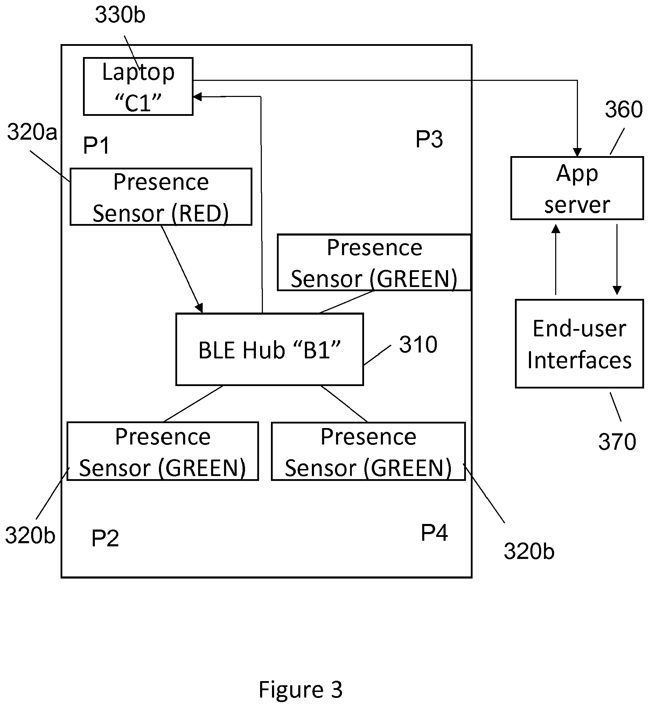

Figure 3 is a schematic representation of system for managing resources according to an example. Sensors 320b can, by default, display a green light to indicate the availability of the resources at a specific location or desk (PI, P2, P3, P4). When a presence sensor 320a detects an employee or employee device 330b the sensor is activated. The activation of the sensor is indicated to the employee by a change of the green light to a red light which the employee can see, or an indication signal to the employee device which it receives. Acknowledgement of the presence of the employee or employee device may be provided using feedback from the employee or employee device to confirm that the change in occupancy status detected by the sensor is accurate. When one or more presence sensors 320a are activated they can send their status change to the BLE Hub 310 which is able to change its ID. In an example, the Hub can change its ID from 'B1.P1**0**.P20.P30.P40' to 'B1.P1**1**.P20.P30.P40' and can send its new ID to the employee device or other client "CI". The employee device or client can then send the new ID 'B1.P1**1**.P20.P30.P40' to the App server 360 for subsequent display at an end-user interface 370.

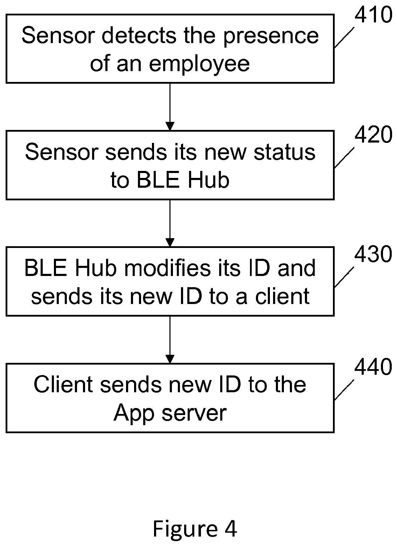

Figure 4 shows a method for managing resources according to an example. At block 410 the sensor detects the presence of an employee. At block 420 the sensor sends its new status to the BLE Hub "B1". At block 430 the BLE Hub "B1" changes its ID from 'B1.P1**0**.P20.P30.P40' to 'B1.P1**1**,P20.P30.P40' and sends its new ID to Client "CI". At block 440 the client "CI" sends 'B1.P1**1**.P20.P30.P40' to the App server via a company intranet for example.

In an example, location capturing can be performed using an apparatus localisation using a low power radio-frequency beacon. The beacon signal from a beacon can be received to locate a physical position in an environment. The location of the apparatus can be determined using an identifier transmitted as part of the beacon signal to the employee device. Hence, there is no requirement to request access to the IT infrastructure. According to an example, end-user interfaces with Smart Bluetooth functionality can be used to locate other end-user interfaces that do not support Smart Bluetooth functionality. In an example, a laptop with Smart Bluetooth (e.g. Bluetooth 4.0) functionality can become a beacon for other laptops without Smart Bluetooth functionality (e.g. Standard Bluetooth or Bluetooth 3.0).

The management of resources via a sensor-based network device provides several benefits over existing approaches, including time saving for employees by simplifying the use of workplace resources, enhanced collaboration, and well-being due to a better appropriation of the working environment. It has the benefit of cost saving by a better management of building occupancy, energy, and other workplace resources. The approach provides an improvement in the location accuracy and provides information on which employees sit where. Energy saving is achieved at the application level giving flexibility and scalability. The approach is less intrusive to employees, since it uses a computer or allocated laptop (rather than a smartphone and/or other personal device carried by the employee), which is a key consideration for working councils and trade unions. Use of BLE provides a lower energy consumption. The system disclosed detects the location of person or employee at a particular place using the network of presence sensors or RFID sensors and without the use of a mobile device.

The present inventions can be embodied in other specific apparatus and/or methods. The described embodiments are to be considered in all respects as illustrative and not restrictive. In particular, the scope of the invention is indicated by the appended claims rather than by the description and figures herein.

## Claims

1. Apparatus for determining the availability presence of a resource, the apparatus comprising:
a low energy wireless sensor (320a, 320b) configured to detect a resource presence state at a location; and
a network device (310) in communication with the sensor comprising:
a processor arranged to modify identification data of the network device based on the presence state at the location; and
a transmitter configured to transmit the modified identification data to an application server (360).

2. An apparatus according to claim 1, further comprising multiple sensors to determine a presence state of a resource at respective different locations.

3. An apparatus according to any preceding claim, wherein the sensor is an RFID sensor.

4. An apparatus according to any preceding claim, wherein the resource is an employee or employee device in a workplace.

5. An apparatus according to any preceding claim, wherein the sensor comprises an indicator to present a visual indication of a presence state at a location.

6. The apparatus according to claim 2, wherein the presence state relates to the resource being present or not present in a vicinity of the one or more of the multiple sensors.

7. The apparatus according to claim 6, wherein the application server comprises a database with associations between two or more of: network device identification; MAC addresses; employee names; and building locations.

8. Method for determining the availability presence of a resource, comprising the steps of:
at a low energy wireless sensor (320a, 320b), detecting a resource presence state at a location;
at a network device (310), modifying identification data of the network device based on the presence state at the location; and
at the network device, transmitting the modified identification data to an application server (360).

9. A method according to claim 8, wherein the network device changes status information data of the sensors according to the presence state.

10. A method according to claim 8 or claim 9, wherein the modified identification data is transmitted to the application server using a short-range communication protocol.

11. A method according to any of claims 8-10, wherein the modified identification data is transmitted to the application server via a client or gateway device.

12. A method according to claim 11, wherein the network device transmits the modified identification data at 433 MHz to the client or gateway device.

13. A method according to claim 11 or claim 12, wherein the client or gateway device transmits the received information to the application server using ethernet or WiFi.

14. A method according any of claims 8-13, further comprising the step of providing an occupancy map to a user-end interface.

## Patentansprüche

1. Einrichtung zum Bestimmen des Verfügbarkeitsvorhandenseins einer Ressource, wobei die Einrichtung Folgendes umfasst:
einen drahtlosen Niedrigenergiesensor (320a, 320b), der dazu ausgelegt ist, einen Ressourcenvorhandenseinszustand an einem Ort zu detektieren; und
eine Netzwerkvorrichtung (310) in Kommunikation mit dem Sensor, die Folgendes umfasst:
einen Prozessor, der angeordnet ist, Identifikationsdaten der Netzwerkvorrichtung auf Basis des Vorhandenseinszustands an dem Ort zu modifizieren; und
einen Sender, der dazu ausgelegt ist, die modifizierten Identifikationsdaten zu einem Anwendungsserver (360) zu übertragen.

2. Einrichtung nach Anspruch 1, die ferner eine Mehrzahl von Sensoren zum Bestimmen eines Vorhandenseinszustands einer Ressource an jeweiligen verschiedenen Orten umfasst.

3. Einrichtung nach einem der vorhergehenden Ansprüche, wobei der Sensor ein RFID-Sensor ist.

4. Einrichtung nach einem der vorhergehenden Ansprüche, wobei die Ressource ein Angestellter oder eine Angestelltenvorrichtung an einem Arbeitsplatz ist.

5. Einrichtung nach einem der vorhergehenden Ansprüche, wobei der Sensor einen Indikator zum Präsentieren einer optischen Anzeige eines Vorhandenseinszustands an einem Ort umfasst.

6. Einrichtung nach Anspruch 2, wobei der Vorhandenseinszustand sich darauf bezieht, dass die Ressource in einer Nähe des einen oder der mehreren der Mehrzahl von Sensoren vorhanden ist oder nicht.

7. Einrichtung nach Anspruch 6, wobei der Anwendungsserver eine Datenbank mit Verknüpfungen zwischen zwei oder mehreren von Folgendem umfasst: Netzwerkvorrichtungsidentifikation; MAC-Adressen; Angestelltennamen und Gebäudeorte.

8. Verfahren zum Bestimmen des Verfügbarkeitsvorhandenseins einer Ressource, das die folgenden Schritte umfasst:
Detektieren eines Ressourcenvorhandenseinszustands an einem Ort an einem drahtlosen Niedrigenergiesensor (320a, 320b);
Modifizieren von Identifikationsdaten der Netzwerkvorrichtung auf Basis des Vorhandenseinszustands an dem Ort an einer Netzwerkvorrichtung (310); und
Übertragen der modifizierten Identifikationsdaten an der Netzwerkvorrichtung zu einem Anwendungsserver (360).

9. Verfahren nach Anspruch 8, wobei die Netzwerkvorrichtung Statusinformationsdaten der Sensoren gemäß dem Vorhandenseinszustand ändert.

10. Verfahren nach Anspruch 8 oder Anspruch 9, wobei die modifizierten Identifikationsdaten unter Verwendung eines Kurzbereichskommunikationprotokolls zum Anwendungsserver übertragen werden.

11. Verfahren nach einem der Ansprüche 8-10, wobei die modifizierten Identifikationsdaten via eine Client- oder eine Gatewayvorrichtung zum Anwendungsserver übertragen werden.

12. Verfahren nach Anspruch 11, wobei die Netzwerkvorrichtung die modifizierten Identifikationsdaten mit 433 MHz zur Client- oder zur Gatewayvorrichtung überträgt.

13. Verfahren nach Anspruch 11 oder Anspruch 12, wobei die Client- oder die Gatewayvorrichtung die empfangenen Informationen unter Verwendung von Ethernet oder WiFi zum Anwendungsserver überträgt.

14. Verfahren nach einem der Ansprüche 8-13, das ferner den Schritt des Bereitstellens einer Belegungskarte für eine benutzerseitige Schnittstelle umfasst.

## Revendications

1. Appareil pour déterminer la présence-disponibilité d'une ressource, l'appareil comprenant :
un capteur sans fil à faible consommation d'énergie (320a, 320b) configuré pour détecter un état de présence de ressource à un emplacement ; et
un dispositif de réseau (310) en communication avec le capteur comprenant :
un processeur agencé pour modifier des données d'identification du dispositif de réseau sur la base de l'état de présence à l'emplacement ; et
un émetteur configuré pour transmettre les données d'identification modifiées à un serveur d'application (360).

2. Appareil selon la revendication 1, comprenant en outre de multiples capteurs pour déterminer un état de présence d'une ressource à différents emplacements respectifs.

3. Appareil selon l'une quelconque des revendications précédentes, dans lequel le capteur est un capteur à identification par radiofréquence, RFID.

4. Appareil selon l'une quelconque des revendications précédentes, dans lequel la ressource est un employé ou un dispositif d'employé dans un lieu de travail.

5. Appareil selon l'une quelconque des revendications précédentes, dans lequel le capteur comprend un indicateur pour présenter une indication visuelle d'un état de présence à un emplacement.

6. Appareil selon la revendication 2, dans lequel l'état de présence concerne la présence ou la non présence de la ressource à proximité des un ou plusieurs capteurs des multiples capteurs.

7. Appareil selon la revendication 6, dans lequel le serveur d'application comprend une base de données avec des associations entre deux éléments ou plus parmi : une identification de dispositif de réseau ; des adresses de commande d'accès au support, MAC ; des noms d'employés ; et des emplacements de bâtiment.

8. Procédé pour déterminer la présence-disponibilité d'une ressource, comprenant les étapes suivantes :
au niveau d'un capteur sans fil à faible consommation d'énergie (320a, 320b), détecter un état de présence de ressource à un emplacement ;
au niveau d'un dispositif de réseau (310), modifier des données d'identification du dispositif de réseau sur la base de l'état de présence à l'emplacement ; et
au niveau du dispositif de réseau, transmettre les données d'identification modifiées à un serveur d'application (360).

9. Procédé selon la revendication 8, dans lequel le dispositif de réseau modifie des données d'informations d'état des capteurs selon l'état de présence.

10. Procédé selon la revendication 8 ou la revendication 9, dans lequel les données d'identification modifiées sont transmises au serveur d'application en utilisant un protocole de communication à courte portée.

11. Procédé selon l'une quelconque des revendications 8 à 10, dans lequel les données d'identification modifiées sont transmises au serveur d'application via un dispositif client ou de passerelle.

12. Procédé selon la revendication 11, dans lequel le dispositif de réseau transmet les données d'identification modifiées à 433 MHz au dispositif client ou de passerelle.

13. Procédé selon la revendication 11 ou la revendication 12, dans lequel le dispositif client ou de passerelle transmet les informations reçues au serveur d'application en utilisant l'Ethernet ou le Wifi.

14. Procédé selon l'une quelconque des revendications 8 à 13, comprenant en outre l'étape consistant à fournir une carte d'occupation à une interface côté utilisateur.
